# EUROPÄISCHE PATENTSCHRIFT

(11) **EP 1 799 079 B1**
(45) Veröffentlichungstag und Bekanntmachung des Hinweises auf die Patenterteilung: **18.02.2009**
(21) Anmeldenummer: 05798156.5
(22) Anmeldetag: 11.10.2005
(51) Int. Cl.: A47J 31/60, B01D 24/00, B01D 27/00

(54) **FILTERKARTUSCHE UND SITZELEMENT FÜR EINE FILTERKARTUSCHE**
FILTER CARTRIDGE AND SEAT ELEMENT FOR A FILTER CARTRIDGE
CARTOUCHE FILTRANTE ET ELEMENT D'ASSISE POUR CARTOUCHE FILTRANTE

(30) Priorität: 13.10.2004 DE 102004049877
(43) Veröffentlichungstag der Anmeldung: 27.06.2007
(73) Patentinhaber: Brita GmbH, 65232 Taunusstein (DE)
(72) Erfinder: NAMUR, Marc, 64297 Darmstadt (DE)
(74) Vertreter: Fuchs
(86) Internationale Anmeldenummer: PCT/EP2005/010914
(87) Internationale Veröffentlichungsnummer: WO 2006/040120

(56) Entgegenhaltungen:
- WO-A-99/01220
- DE-U1- 9 207 977
- DE-U1- 9 401 271
- US-A1- 2001 009 237

## Beschreibung

Die Erfindung betrifft eine Filterkartusche, insbesondere Saugfilterkartusche, gemäß dem Oberbegriff des Patentanspruchs 1. Die Erfindung bezieht sich auch auf ein Sitzelement für eine solche Filterkartusche. Der Einlaufbereich und die Auslauföffnung der Filterkartusche sind im Bodenbereich der Filterkartusche angeordnet, was auch einen seitlichen Zulauf oder Auslauf in einem unteren, dem Boden benachbarten Abschnitt von Aufström- und Abströmkammer einschließt.

Saugfilterkartuschen werden in Wasserbehälter von Getränkemaschinen, z. B. für Heißgetränke, eingesetzt, die über eine Saugpumpe verfügen, wie z. B. Kaffeemaschinen u. a. Die Ein- und Auslauföffnungen der Saugfilterkartusche befinden sich im Bodenbereich des ansonsten vollständig gekapselten Kartuschengehäuses. Im Wasserbehälter des Gerätes befindet sich ein an die Auslauföffnung angepasstes Sitzelement, das ein eigenständiges Bauteil sein kann oder das an den Wasserbehälter angeformt ist. Dieses Sitzelement besitzt ebenfalls eine Auslassöffnung, durch die das filtrierte Wasser aus dem Wasserbehälter abfließen kann. Das Sitzelement dient als Aufnahme für die Saugfilterkartusche, die in dieses Sitzelement eingesetzt wird.

Da die Auslauföffnung des Wasserbehälters an die Saugpumpe des Gerätes angeschlossen ist, wird das zu filtrierende Wasser aus dem Wasserbehälter in die Kartusche gesaugt, durchströmt in der Kartusche das oder die Filtermedien und gelangt filtriert zur Auslassöffnung.

Da die Saugfilterkartusche im Wasserbehälter des Gerätes angeordnet ist, schwimmt die Filterkartusche dann auf, wenn der Wasserbehälter gefüllt ist. Um ein Aufschwimmen und somit ein Abheben der Filterkartusche von der Auslauföffnung des Sitzelements des Wasserbehälters zu verhindern, sind besondere Befestigungsmittel vorgesehen. Gemäß einer bekannten Lösung wird die Saugfilterkartusche auf das Sitzelement aufgeschraubt. Ein Nachteil besteht darin, dass Saugfilterkartuschen mit asymmetrischem Filtergehäuse nicht in schmale Wasserbehälter eingeschraubt werden können. Zusätzlich sind bei tiefen und schmalen Wasserbehältern Hilfsmittel erforderlich, um die Kartusche einzuschrauben.

Eine andere Lösung sieht vor, die Saugfilterkartusche auf das Sitzelement aufzusetzen und nach dem Einsetzen ein Spannelement umzulegen, um die Saugfilterkartusche in ihrer Position zu fixieren.

Aus der WO 99/01220 ist eine Saugfilterkartusche bekannt, wobei die Wassereintrittsöffnung unten angeordnet ist und ein Durchgang für das Wasser durch das Filtermedium im Aufstrom vorhanden ist. Weiterhin ist eine absteigende Failleitung zur Führung des Wassers, zu einem unten befindlichen Entnahmeanschluss des Wasserbehälters vorgesehen. Dabei wird das Filtermittelgemisch, das aus Aktivkohle und lonentauscher besteht, während des Betriebs nach oben hin aufgeschwemmt, was einer Bettverdichtung des Filterbettes entgegenwirkt.

Die Fallleitung ist zentral innerhalb der Saugfilterkartusche angeordnet, so dass der Bodenanschluss der Saugfilterkartusche ebenfalls zentral erfolgen kann. Hierbei ist die Zuflussöffnung in der Saugfilterkartusche ringförmig angeordnet.

Zur Abdichtung des Auslaufkanals gegenüber dem Einlaufkanal ist ein Axialdichtelement erforderlich.

Die Saugfilterkartusche besitzt an ihrer Unterseite Fixierelemente, mit denen sie auf einem Sitzelement aufsteckbar ist. Zusätzlich ist es jedoch erforderlich, dass sich die Saugfilterkartusche am Deckel des Wasserbehälters abstützt, um ein Aufschwimmen der Saugfilterkartusche bei gefülltem Wasserbehälter zu verhindern. Dabei kann es bei tiefen Wasserbehältern erforderlich sein, die Saugfilterkartusche an der Oberseite, z. B. mit einem Stab zu verlängern.

Derartige zusätzliche Sicherungselemente werden häufig nicht richtig angebracht, wodurch der dichte Sitz auf dem Sitzelement nicht gewährleistet ist.

Es ist daher Aufgabe der Erfindung, eine Füterkartusche, insbesondere eine Saugfilterkartusche, bereitzustellen, die ohne zusätzliche Sicherungselemente auskommt, auf einfache Weise einsetzbar ist und eine zuverlässige Abdichtung im Bereich der Auslauföffnung garantiert.

Diese Aufgabe wird mit einer Filterkartusche gelöst, bei der in der Auslauföffnung ein nach innen weisender, umlaufender Schnapprand vorgesehen ist, der von einer ersten unteren Schnappposition in eine obere zweite Schnappposition und umgekehrt umklappbar ist.

Das dazugehörige Sitzelement ist gekennzeichnet durch einen, in die Auslauföffnung der Filterkartusche eingreifenden Rohrstutzen, der mindestens ein Betätigungselement aufweist, das beim Aufsetzen der Filterkartusche den Schnapprand von der ersten unteren Schnappposition in die zweite obere Schnappposition bewegt, in der der Schnapprand abdichtend und klemmend am Rohrstutzen anliegt.

Vorzugsweise ist das Betätigungselement eine am Rohrstutzen angeordnete Ringschulter.

Die Filterkartusche wird mit dem in unterer Schnappposition befindlichen Schnapprand von oben auf das Sitzelement aufgesetzt und soweit nach unten gedrückt, bis der Schnapprand nach oben umklappt und hierbei am Rohrstutzen des Sitzelementes angreift. Das Sitzelement ist derart an den Schnapprand angepasst, dass bei umgeklapptem Schnapprand die Filterkartusche abdichtend am Rand des Rohrstutzens anliegt und fixiert ist. Das Umklappen signalisiert dem Benutzer, dass die Filterkartusche ihre vorgegebene Dichtposition eingenommen hat. Es wird somit eine Fehlpositionierung durch den Benutzer verhindert.

Zum Entfernen der Filterkartusche wird diese lediglich nach oben herausgezogen, wobei der Schnapprand in seine untere Schnappposition zurückklappt.

Vorzugsweise weist die Auslauföffnung einen Auslaufstutzen auf, an dessen unteren Ende der Schnapprand angelenkt ist. Der Schnapprand kann über ein Filmscharnier angelenkt sein.

Der Schnapprand ist vorzugsweise ein sich radial nach innen erstreckender flacher Randstreifen.

Der Randstreifen ist vorzugsweise als Ring ausgeführt.

Der Schnapprand nimmt zwei stabile Positionen ein, nämlich eine untere und eine obere Position. In der Mittelposition nimmt der Schnapprand eine labile Position ein, von wo er aufgrund seiner Spannung von selbst entweder in die eine oder die andere Position umklappt. Der Schnapprand besteht vorteilhafterweise aus einem elastischen Kunststoff.

Durch den Umklappvorgang des Schnapprandes werden radiale Kräfte auf den Auslaufstutzen ausgeübt, die zu einer Aufweitung und unter Umständen in der oberen zweiten Schnappposition zu einem Nachlassen der Klemmkräfte führen könnten. Es ist deshalb vorteilhaft, wenn der Auslaufstutzen von einem Stabilisierungsring umgeben ist.

Vorteilhafterweise besitzt der Stabilisierungsring einen in die Auslauföffnung ragenden, abgewinkelten Bund, an dem der Schnapprand in seiner ersten unteren Schnappposition anliegt. Dadurch wird eine definierte Ausgangsposition für den Schnapprand gewährleistet.

Vorzugsweise ist der Stabilisierungsring drehbar am Auslaufstutzen angeordnet. Die Drehbarkeit des Stabilisierungsrings eröffnet die Möglichkeit, einen im Querschnitt einstellbaren Bypass vorzusehen, der den Einlaufbereich mit der Auslauföffnung verbindet.

Der einstellbare Bypass ist vorzugsweise derart dimensioniert, dass nicht das gesamte Rohwasser unmittelbar vom Einlaufbereich in die Auslassöffnung strömt. Vorzugsweise ist der Bypass derart ausgelegt, dass max. 50 % des Rohwassers zur Auslauföffnung abgezweigt werden können.

Dies ist insbesondere dann möglich, wenn der Einlaufbereich der Filterkartusche den Auslaufstutzen ringförmig umgibt.

Gemäß einer ersten Variante weist der Auslaufstutzen mindestens eine erste Öffnung auf. Der Stabilisierungsring weist einen zylindrischen, am Auslaufstutzen anliegenden Abschnitt auf, an dem sich vorzugsweise ein Verschlusselement oder in dem sich vorzugsweise mindestens eine zweite Öffnung befindet, die mit der ersten Öffnung zur Deckung bringbar ist. In diesem Fall bilden erste und zweite Öffnung/en zusammen die Bypass-Öffnung/en.

Durch Verdrehen des Stabilisierungsrings lässt sich der Querschnitt der ersten Öffnung des Auslaufstutzens verändern, so dass die zugemischte Menge des unbehandelten Rohwassers zu dem durch das Filtermittel der Filterkartusche behandelten Wasser gezielt eingestellt werden kann. Mit Hilfe eines solchen Bypasses kann die Leistung der Filterkartusche an die Wasserqualität angepasst werden, so dass ein für den Geschmack und für die Getränkemaschine optimales Wasser entnommen werden kann. Je nach der vom Standort der Getränkemaschine abhängigen Wasserqualität und der gewählten Kaffeesorte kann nämlich vollständig entkarbonisiertes Wasser nicht optimal für die Entfaltung des Aromas sein, und auch die Maschinenteile können in Mitleidenschaft gezogen werden. Wenn die Entkarbonisierung nämlich nicht angepasst wird, kann es im schlimmsten Fall zu Korrosion an den metallischen Bauteilen kommen. Die Folgen sind dann hohe Wartungs- und Reparaturkosten.

Zusätzlich steigert der integrierte Bypass die Kapazität der Filterkartusche. Wird aufgrund der Wasserqualität weniger Leistung benötigt, so ist dies einstellbar und die Filterkartusche enthärtet auf längere Zeit auf gleichem Niveau.

Vorzugsweise ist die zweite Öffnung des Stabilisierungsrings ≥der ersten Öffnung des Auslaufstutzens.

Der Stabilisierungsring liegt vorzugsweise dichtend auf dem Auslaufstutzen an. Dadurch wird verhindert, dass bei geschlossenen ersten Öffnungen unbeabsichtigt Rohwasser insbesondere durch die zweiten Öffnungen des Stabilisierungsrings zwischen dem Stabilisierungsring und dem Auslaufstutzen in die Auslauföffnung gelangen kann.

Eine zweite Variante sieht mindestens eine Bypassöffnung in der Bodenwand der Abströmkammer vor. Die Bypassöffnung wird vorzugsweise von einem am Stabilisierungsring angeordneten Verschlusselement verschlossen, wobei durch Verdrehen des Stabilisierungsrings die durch die Bypassöffnung strömende Rohwassermenge eingestellt werden kann.

Das Verschlusselement kann eine am Stabilisierungsring angeordneter teilringförmiger Bund sein, der vorzugsweise dichtend an der Unterseite der Bodenwand der Abströmkammer anliegt.

Anstelle eines Verschlusselements kann - wie bei der ersten Variante - der Bund eine oder mehrere zweite Öffnung/en aufweisen, die mit der Öffnung/en in der Bodenwand der Abströmkammer zur Deckung bringbar ist/sind.

Das Rohwasser gelangt im Unterschied zur ersten Variante nicht unmittelbar in den Auslaufstutzen, sondern wird in das Innere der Abströmkammer geleitet, wodurch die Möglichkeit eröffnet wird, auch dieses Rohwasser einer Filtration zu unterziehen.

Wie weit das Rohwasser in den Innenraum der Abströmkammer eingeleitet wird, kann durch die Länge eines die Bypassöffnung umgebenden Steigrohrs definiert werden. Der untere Bereich der Abströmkammer wird somit vom bereits filtrierten und vom über die Bypassöffnung eingeleiteten Rohwasser gemeinsam genutzt.

Dieser gemeinsam genutzte Bereich kann eine Schüttung aus Aktivkohle zur Entchlorung des Bypasswassers aufweisen. Je nach Art und Form des Schüttungsmaterials kann auf der Schüttung eine Trennschicht angeordnet sein, die beispielsweise aus einem Vlies bestehen kann, um eine Vermischung mit dem gegebenenfalls darüber angeordneten Filtermittel, z. B. aus lonenaustauschermaterial, zu verhindern.

Dieser gemeinsam genutzte Bereich innerhalb der Abströmkammer kann auch durch einen flüssigkeitsdurchlässigen Zwischenboden abgetrennt sein. In der zwischen Boden und Zwischenboden gebildeten Kammer kann ein Filtermedium, insbesondere aus einem Aktivkohlevlies, angeordnet sein.

Sowohl die Aufströmkammer als auch die Abströmkammer können mindestens ein Filtermittel aufweisen. Es hat sich als vorteilhaft herausgestellt, dass die Aufströmkammer ein Wirbelbett und die Abströmkammer ein Festbett aufweisen. Der Vorteil der Ausstattung beider Filterkammern mit Filtermitteln liegt darin, dass auf die im Stand der Technik verwendeten Fall- bzw. Steigrohre, die sich über die gesamte Höhe der Saugfilterkartusche erstrecken, verzichtet werden kann. In der Aufströmkammer stellt sich durch das Wirbelbett nur ein geringer Druckverlust ein.

Vorteilhafterweise weist der Auslaufstutzen und/oder Stabilisierungsring, vorzugsweise unterhalb der ersten Öffnung, mindestens einen sich um den Umfang erstreckenden Dichtwulst auf, so dass ein ungewollter Bypass verhindert wird.

In einer einfachen Ausführung kann das Sitzelement eine Grundplatte aufweisen, an der der Rohrstutzen angeordnet ist.

Um das Einströmen des Rohwassers in die Filterkartusche zu ermöglichen oder zu erleichtern, ist auf der Grundplatte mindestens ein Distanzelement angeordnet. Beim Einsetzen der Filterkartusche liegt diese auf dem Distanzelement auf.

Weiterhin kann mindestens ein Positionierelement auf der Grundplatte vorgesehen sein, um das Einsetzen der Filterkartusche auf dem Sitzelement zu erleichtern.

Beispielhafte Ausführungsformen der Erfindung werden nachfolgend anhand der Zeichnungen näher erläutert. Als Beispiel für die erfindungsgemäße Filterkartusche wird eine Saugfilterkartusche beschrieben.

Es zeigen:
- Fig. 1: eine perspektivische Ansicht einer Saugfilterkartusche mit angesetztem Sitzelement,
- Fig. 2a: einen Vertikalschnitt durch die in Fig. 1 gezeigte Saugfilterkartusche mit angesetztem Sitzelement,
- Fig. 2b: eine vergrößerte Darstellung des Auslaufbereichs der in der Fig. 2a gezeigten Saugfilterkartusche,
- Fig. 3: einen Vertikalschnitt durch die in den Fig. 1 und 2a, b gezeigte Saugfilterkartusche ohne Sitzelement,
- Fig. 4: eine vergrößerte perspektivische Darstellung des unteren Bereichs der in den Fig. 1 bis 3 gezeigten Saugfilterkartusche, teilweise im Schnitt,
- Fig. 5: eine perspektivische Draufsicht auf das in den Fig. 1 und 2a, b gezeigte Sitzelement,
- Fig. 6: eine vergrößerte Schnittdarstellung des unteren Bereichs einer Saugfilterkartusche gemäß einer weiteren Ausführungsform,
- Fig. 7: eine perspektivische Unteransicht auf die Auslauföffnung der Saugfilterkartusche.

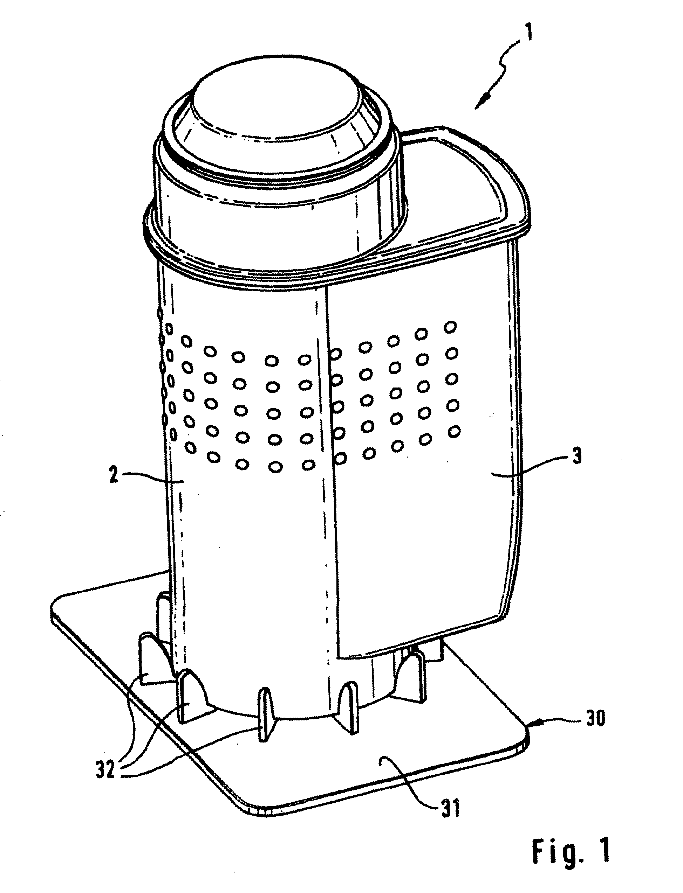

In der Figur 1 ist eine Saugfilterkartusche 1 in Seitenansicht dargestellt. Die Saugfilterkartusche 1 besitzt ein zentrales Gehäuseteil 2, das die Abströmkammer 2a aufweist, und ein an das Gehäuseteil 2 seitlich angesetztes Gehäuseteil 3. Die versetzte Anordnung der Gehäuseteile 2 und 3 hat den Zweck, dass bei geringer Breite des Wasserbehälters, in den die Saugfilterkartusche 1 eingesetzt wird, die Auf- und Abströmkammern mit großem Volumen ausgebildet werden können.

Die Saugfilterkartusche 1 sitzt auf einem Sitzelement 30 auf, das sich in oder an der Auslauföffnung des Wasserbehälters (nicht dargestellt) befindet. Eine ebenfalls nicht dargestellte Saugpumpe ist an die Auslauföffnung angeschlossen. Im Betrieb wird Wasser aus dem Wasserbehälter in die Saugfilterkartusche 1 gesaugt und durch die Auslauföffnung abgezogen. Das Sitzelement 30 kann auch integraler Bestandteil des Wasserbehälters sein. Das Sitzelement 30 besitzt eine Grundplatte 31, auf der kranzförmig Positionierelemente 32 angeordnet sind, was nachfolgend noch eingehender beschrieben wird.

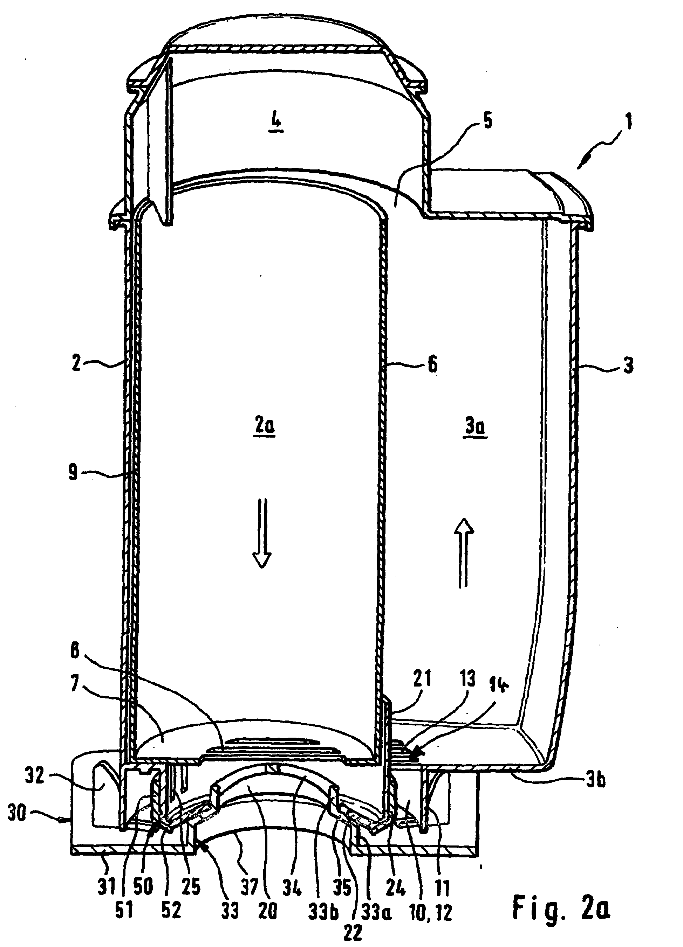

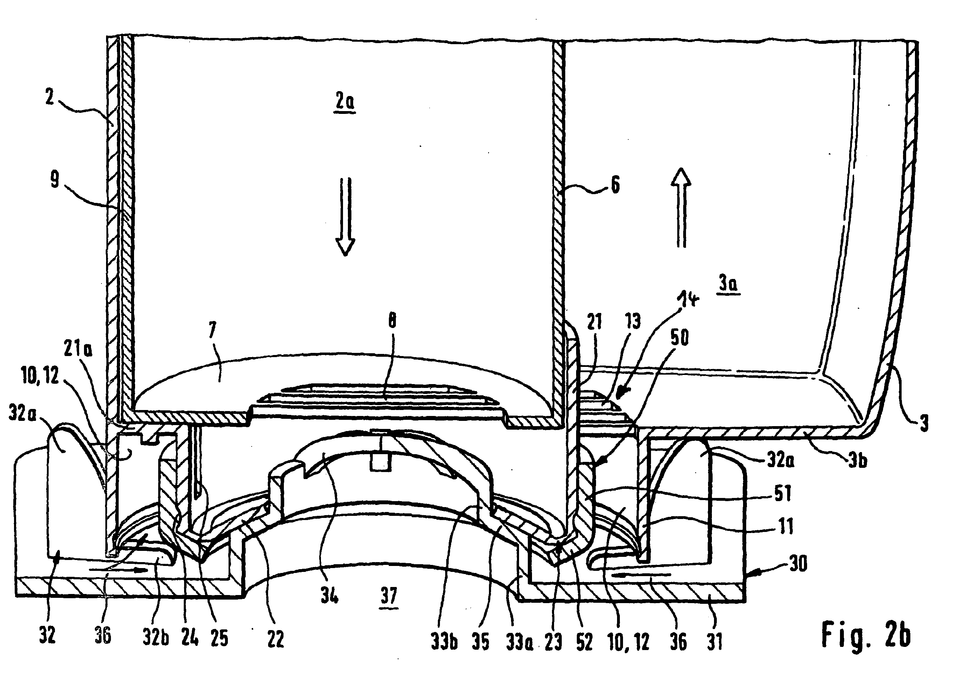

In den Figuren 2a, b ist ein Vertikalschnitt durch die in Fig. 1 gezeigte Saugfilterkartusche 1 mit angesetztem Sitzelement 30 dargestellt. Im zentralen Gehäuseteil 2 befindet sich die Abströmkammer 2a, die mit einem Festbett aus Filtermaterial gefüllt sein kann. Im angesetzten Gehäuseteil 3 mit Bodenwand 3b befindet sich die Aufströmkammer 3a, die ein Wirbelbett aus Filtermaterial enthalten kann. Diese Aufströmkammer 3a ist mittels einer vertikal angeordneten Trennwand 6 von der Abströmkammer 2a abgeteilt. In der hier gezeigten Ausführung ist die Trennwand 6 Bestandteil der Umfangswand des Abströmeinsatzes 9, der außerdem eine Bodenwand 7 mit zentral angeordneten Bodengitter 8 aufweist. Beide Kammern 2a, 3a sind über eine im oberen Bereich der Saugfilterkartusche 1 angeordnete Verbindungskammer 4 mit Verbindungsöffnung 5 verbunden.

Im unteren Bereich der Saugfilterkartusche 1 ist der Einlaufbereich 10 angeordnet, der als Ringkanal 12 ausgebildet ist. Dieser Ringkanal 12 wird durch eine nach unten vorstehende, am zentralen und angesetzten Gehäuse 2, 3, angeformte Ringwand 11 und einen die Auslauföffnung 20 der Abströmkammer 2a umgebenden Auslaufstutzen 21 gebildet. Der Ringkanal 12 mündet über ein Gitter 13 in der Bodenwand 3b in die Aufströmkammer 3a. Das Gitter 13 weist die Einlauföffnungen 14 auf.

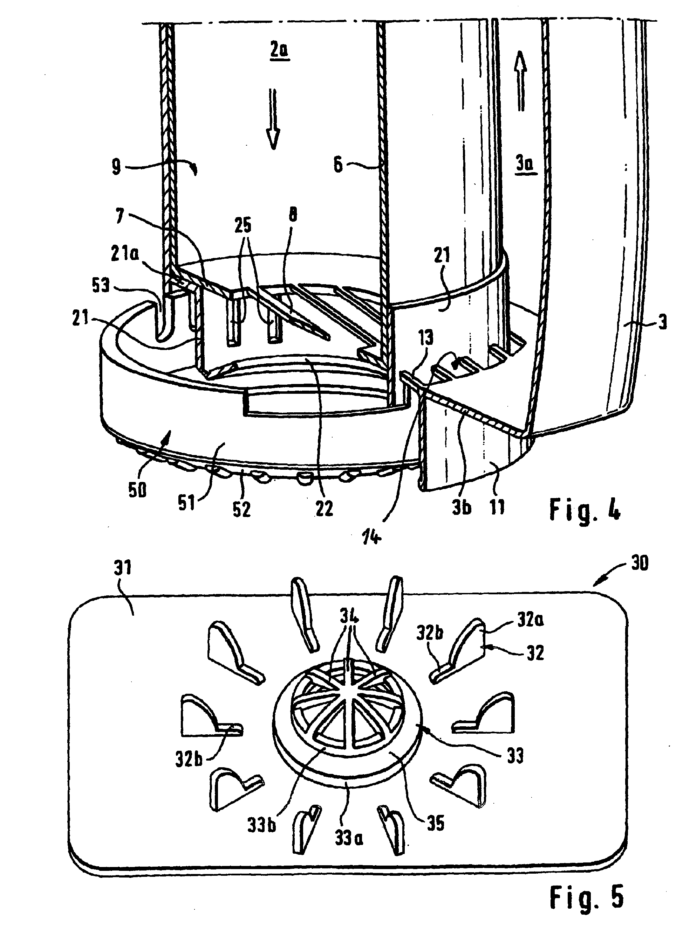

Der Auslaufstutzen 21 weist erste Öffnungen 25 auf, die den Einlaufbereich 10 bzw. den Ringkanal 12 mit der Auslauföffnung 20 verbinden. Es handelt sich hierbei um schlitzförmige Öffnungen 25, die über einen Abschnitt des Umfangs des Auslaufstutzens 21 verteilt angeordnet sind. Am unteren Ende des Auslaufstutzens 21 ist ein geschlossener ringförmiger Schnapprand 22 über ein Filmscharnier 23 angelenkt, der radial nach innen in die Auslauföffnung 20 vorsteht. An der Außenwand des Auslaufstutzens 21 liegt ein Stabilisierungsring 50 an, der einen zylindrischen Abschnitt 51 und einen nach innen, schräg abgewinkelten Bund 52 aufweist. Im zylindrischen Abschnitt 51 sind zweite Öffnungen 53 (siehe auch Fig. 4) angeordnet, die durch Drehen des Stabilisierungsrings 50 mit den ersten Öffnungen 25 zur Deckung gebracht werden können. Erste und zweite Öffnungen 25, 53 bilden zusammen die Bypassöffnungen.

Das Sitzelement 30 weist einen seine Auslassöffnung 37 umgebenden Rohrstutzen 33 auf, der aus einem unteren Abschnitt 33a und einem durchmesserreduzierten Abschnitt 33b besteht. Zwischen beiden Abschnitten 33a, 33b ist eine, schräg nach oben weisende Ringschulter 35 angeordnet, die das Betätigungselement für den Schnapprand 22 bildet. Stege 34 überspannen die Auslassöffnung 37 am oberen Abschnitt 33b.

Beim Aufsetzen der Saugfitterkartusche 1 auf das Sitzelement 30 wird der Schnapprand 22 von der Ringschulter 35 erfasst und nach oben in seine zweite Schnappposition umgeklappt, in der er abdichtend und klemmend auf dem Abschnitt 33b des Rohrstutzens 33 anliegt, wodurch die Saugfilterkartusche 1 fixiert wird. Der Außendurchmesser des Abschnitts 33b ist geringfügig größer als der Innendurchmesser des Schnapprandes 22 in seiner zweiten Schnappposition, damit die gewünschten Klemmkräfte auftreten. Zusätzliche Dichtelemente sind nicht erforderlich.

Bei gefülltem Wasserbehälter bzw. abgeschalteter Saugpumpe kann die Saugfilterkartusche nicht aufschwimmen. Zusätzliche Fixierungs-und Befestigungsmittel für die Saugfilterkartusche 1 sind daher nicht erforderlich.

Das Sitzelement, 30 weist Positionierelemente 32 auf, die aufragende Zentrierelemente 32a und Distanzelemente 32b umfassen. Die Ringwand 11 der Saugfilterkartusche 1 sitzt auf den Distanzelementen 32b auf, so dass Rohwasser durch den Zwischenraum zwischen Grundplatte 31 und Ringwand 11 in die Saugfilterkartusche 1 einströmen kann. Zwischen den Positionierelementen 32 werden auf diese Weise Einlasskanäle 36 gebildet (siehe Fig. 2b).

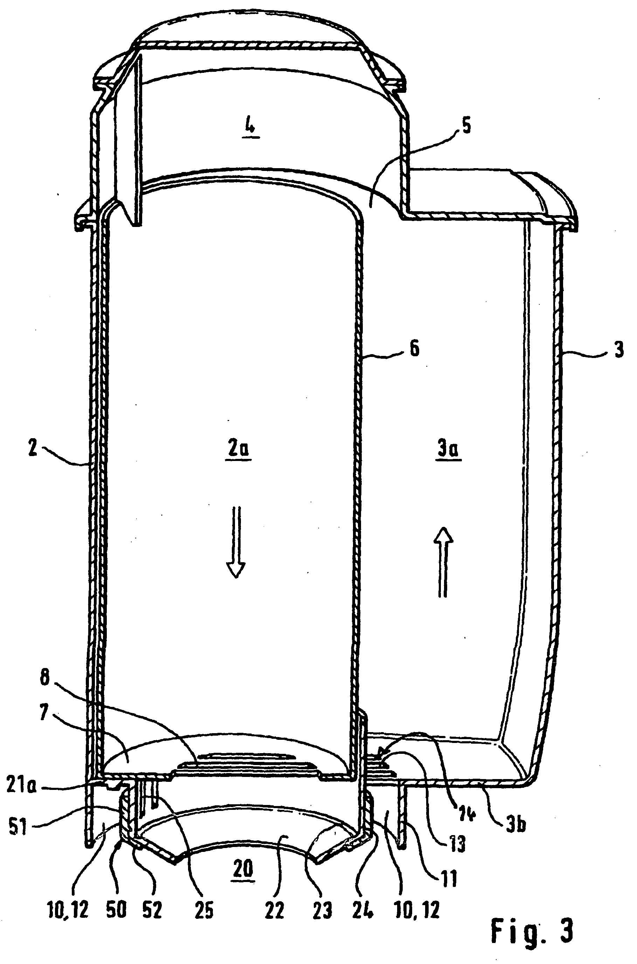

In der Fig. 3 ist die Saugfilterkartusche 1, mit dem Schnapprand 22 in seiner unteren Schnappposition dargestellt, in der der Schnapprand 22 auf dem Bund 52 des Stabilisierungsrings 50 aufliegt. Zur Abdichtung zwischen Stabilisierungsring 50 und Auslaufstutzen 21 weist der Stabilisierungsring 50 an seinem zylindrischen Abschnitt 51 einen umlaufenden Dichtwulst 24 auf.

In der Fig. 4 ist der untere Bereich der Saugfiftertcartusche 1 vergrößert und perspektivisch dargestellt. Der drehbare Stabilisierungsring 50 ist mit den zweiten Öffnungen 53 versehen, die den ersten Öffnungen 25 gegenüberliegen. Durch Drehung des Stabilisierungsrings 50 können diese zweiten Öffnungen 53 mit den ersten Öffnungen 25 zur Deckung gebracht werden. Je nachdem wie groß der Grad der Überdeckung der Öffnungen 25, 53 ist, wird mehr oder weniger Rohwasser von dem Einlaufbereich 10 unmittelbar in die Auslauföffnung 20 eingeleitet.

In der Fig. 5 ist das Sitzelement 30 perspektivisch dargestellt. Es ist zu sehen, dass der Rohrstutzen 33 von einem Kranz von Positionierungselementen 32 umgeben ist.

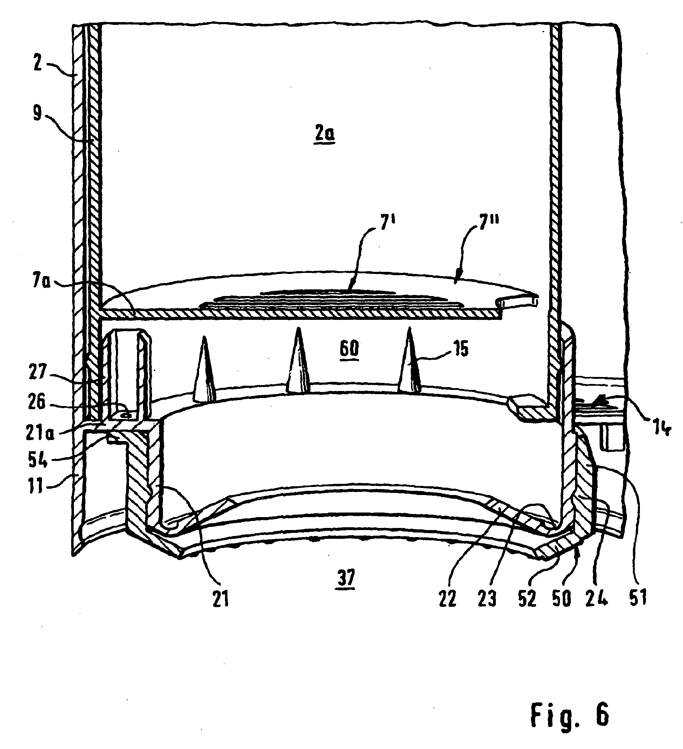

In der Fig. 6 ist der untere Teil einer Saugfilterkartusche 1 gemäß einer weiteren Ausführungsform, die die Bypassöffnungen betrifft, dargestellt. Im Unterschied zu der zuvor beschriebenen Ausführungsform befindet sich mindestens eine Bypassöffnung 26, vorzugsweise als Bohrungen, in der Bodenwand 21 a, die den Auslaufstutzen 21 mit der Ringwand 11 verbindet. Diese Bodenwand 21 a ist auch in den Figuren 2a, 2b, 3 und 4 dargestellt, wobei die Bodenwand 7 des Abströmeinsatzes 9 auf dieser Bodenwand 21 a aufliegt. In der in Figur 6 gezeigten Ausführungsform fehlt die Bodenwand 7, so dass die Bodenwand 21a die Abströmkammer 2a nach unten abschließt. Durch die Bypassöffnungen 26, wobei in der Figur 6 lediglich eine Bypassöffnung 26 zu sehen ist, wird das in den Ringkanal 12 einströmende Rohwasser nicht unmittelbar in die Auslassöffnung 37 geleitet, sondern in das Innere der Abströmkammer 2a, die beabstandet zur Bodenwand 21 a einen für Flüssigkeit durchlässigen Zwischenboden 7a aufweist. Die Durchlässigkeit des Zwischenbodens 7a ist auf einen zentralen Bereich 7' beschränkt. Durch den Zwischenboden 7a wird im unteren Bereich der Abströmkammer 2a eine weitere Kammer 60 abgetrennt. Innerhalb dieser Kammer 60 sind Steigrohre 27 angeordnet, die die Bypassöffnungen 26 umgeben. Das Rohwasser wird durch diese Steigrohre 27 nach oben geleitet und durch den undurchlässigen Ringbereich 7" des Zwischenbodens 7a umgelenkt. In der Kammer 60 kann ein Filtermaterial angeordnet sein, beispielsweise ein Vlies, das von den Nadeln 15 gehalten wird.

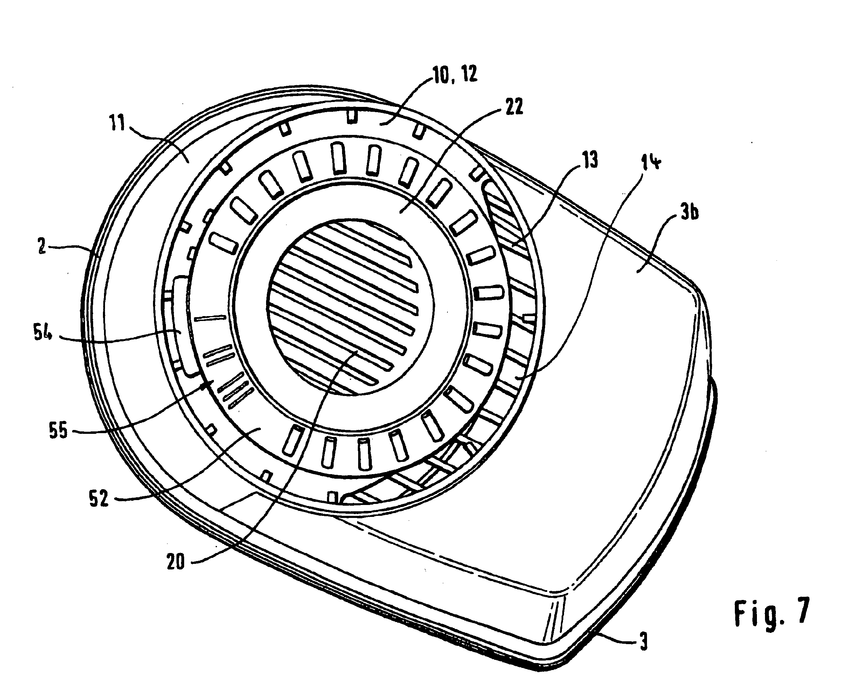

Zum Verschließen bzw. Freigeben der Bypassöffnungen 26 ist der Stabilisierungsring 50 am oberen Rand mit einem Verschlusselement 54 versehen, das an den Stabilisierungsring 50 angeformt ist. Um unerwünschte Bypässe zu verhindern, liegt dieses Verschlusselement 54 dichtend an der Unterseite der Bodenwand 21a an. Das Verschlusselement 54 besteht aus einem teilringförmigen Bund, wie dies in der Fig. 7 zu sehen ist. Durch Verdrehen des Stabilisierungsrings 50 können die Bypassöffnungen 26 freigegeben oder verschlossen werden.

In Fig. 7 ist eine perspektivische Unteransicht auf die Auslauföffnung 20 der Saugfilterkartusche 1 dargestellt. Der Bund 52 ist mit Markierungen 55 versehen, die dem Benutzer anzeigen, in welcher Stellung sich der Stabilisierungsring 50 befindet. Der Stabilisierungsring 50 kann vom Benutzer mittels der Riffelung verdreht werden, so dass er die gewünschte Flüssigkeitsmenge, die in die Auslauföffnung 20 umgeleitet werden soll, einstellen kann. Außerdem ist das Verschlusselement 54 als teilringförmiger Bund des Stabilisierungsrings 50 zu sehen.

### Bezugszeichenliste

- 1: Saugfilterkartusche
- 2: zentrales Gehäuseteil
- 2a: Abströmkammer
- 3: angesetztes Gehäuseteil
- 3a: Aufströmkammer
- 3b: Bodenwand
- 4: Verbindungskammer
- 5: Verbindungsöffnung
- 6: Trennwand
- 7: Bodenwand
- 7': durchlässiger Bereich
- 7": undurchlässiger Bereich
- 7a: Zwischenboden
- 8: Bodengitter
- 9: Abströmeinsatz
- 10: Einlaufbereich
- 11: Ringwand
- 12: Ringkanal
- 13: Gitter
- 14: Einlauföffnung
- 15: Nadeln

- 20: Auslauföffnung
- 21a: Bodenwand
- 21: Auslaufstutzen
- 22: Schnapprand
- 23: Filmscharnier
- 24: Dichtwulst
- 25: erste Öffnung
- 26: Bypassöffnung
- 27: Steigrohr

- 30: Sitzelement
- 31: Grundplatte
- 32: Positionierelement
- 32a: Zentrierelement
- 32b: Distanzelement
- 33: Rohrstutzen
- 33a: unterer Abschnitt
- 33b: oberer Abschnitt
- 34: Steg
- 35: Ringschulter
- 36: Einlasskanal
- 37: Auslassöffnung

- 50: Stabilisierungsring
- 51: zylindrischer Abschnitt
- 52: Bund
- 53: zweite Öffnung
- 54: Verschlusselement
- 55: Markierung

- 60: Kammer

## Patentansprüche

1. Filterkartusche (1), insbesondere Saugfilterkartusche, mit Filtermittel, mit mindestens einer Aufströmkammer (3a) und mindestens einer Abströmkammer (2a), die im oberen Bereich miteinander in Verbindung stehen, und mit einem, mindestens einer Einlauföffnung (14) vorgeschalteten Einlaufbereich (10) und mit einer Auslauföffnung (20), die beide im Bodenbereich angeordnet sind, **dadurch gekennzeichnet, dass** in der Auslauföffnung (20) ein nach innen weisender, umlaufender Schnapprand (22) vorgesehen ist, der von einer ersten unteren Schnappposition in eine obere zweite Schnappposition und umgekehrt umklappbar ist.

2. Füterkartusche (1) nach Anspruch 1, **dadurch gekennzeichnet, dass** die Auslauföffnung (20) einen Auslaufstutzen (21) aufweist, an dessen unteren Ende der Schnapprand (22) angelenkt ist.

3. Filterkartusche (1) nach Anspruch 1 oder 2, **dadurch gekennzeichnet, dass** der Schnapprand (22) über ein Filmscharnier (23) angelenkt ist.

4. Filterkartusche (1) nach einem der Ansprüche 1 bis 3, **dadurch gekennzeichnet, dass** der Schnapprand (22) ein sich radial nach innen erstreckender flacher Randstreifen ist.

5. Filterkartusche (1) nach einem der Ansprüche 2 bis 4, **dadurch gekennzeichnet, dass** der Auslaufstutzen (21) an seiner Außenseite von einem Stabilisierungsring (50) umgeben ist.

6. Filterkartusche (1) nach Anspruch 5, **dadurch gekennzeichnet, dass** der Stabilisierungsring (50) einen in die Auslauföffnung (20) ragenden abgewinkelten Bund (52) aufweist, an dem der Schnapprand (22) in seiner ersten unteren Schnappposition anliegt.

7. Filterkartusche (1) nach einem der Ansprüche 2 bis 6, **dadurch gekennzeichnet, dass** der Einlaufbereich (10) den Auslaufstutzen (21) ringförmig umgibt.

8. Filterkartusche (1) nach einem der Ansprüche 5 bis 7, **dadurch gekennzeichnet, dass** der Stabilisierungsring (50) drehbar am Auslaufstutzen (21) angeordnet ist.

9. Filterkartusche (1) nach einem der Ansprüche 2 bis 8, **dadurch gekennzeichnet, dass** der Auslaufstutzen (21) mindestens eine erste Öffnung (25) aufweist.

10. Filterkartusche (1) nach einem der Ansprüche 5 bis 9, **dadurch gekennzeichnet, dass** der Stabilisierungsring (50) einen zylindrischen, am Auslaufstutzen (21) anliegenden Abschnitt (51) aufweist, an dem sich ein Verschlusselement (54) oder in dem sich mindestens eine zweite Öffnung (53) befindet, die mit der ersten Öffnung (25) zur Deckung bringbar ist.

11. Filterkartusche (1) nach einem der Ansprüche 9 oder 10, **dadurch gekennzeichnet, dass** die zweite Öffnung (53) des Stabilisierungsrings (50) ≥der ersten Öffnung (25) des Auslaufstutzens (21) ist.

12. Filterkartusche (1) nach einem der Ansprüche 5 bis 11, **dadurch gekennzeichnet, dass** der Stabilisierungsring (50) dichtend auf dem Auslaufstutzen (21) anliegt.

13. Filterkartusche nach einem der Ansprüche 1 bis 8, **dadurch gekennzeichnet, dass** in der Bodenwand (7, 21 a) der Abströmkammer (2a) mindestens eine Bypassöffnung (26) angeordnet ist.

14. Filterkartusche nach Anspruch 13, **dadurch gekennzeichnet, dass** in der Abströmkammer (2a) ein die Bypassöffnung (26) umgebendes Steigrohr (27) angeordnet ist.

15. Filterkartusche nach Anspruch 13 oder 14, **dadurch gekennzeichnet, dass** der Stabilisierungsring (50) ein an der Unterseite der Bodenwand (7, 21 a) anliegendes Verschlusselement (54) aufweist.

16. Filterkartusche nach Anspruch 15, **dadurch gekennzeichnet, dass** das Verschlusselement (54) ein teilringförmiger Bund ist.

17. Filterkartusche nach einem der Ansprüche 1 bis 16, **dadurch gekennzeichnet, dass** die Abströmkammer (2a) einen flüssigkeitsdurchlässigen Zwischenboden (7a) aufweist.

18. Filterkartusche (1) nach einem der Ansprüche 1 bis 17, **dadurch gekennzeichnet, dass** sowohl die Aufströmkammer (3a) als auch die Abströmkammer (2a) mindestens ein Filtermittel aufweisen.

19. Filterkartusche (1) nach Anspruch 18, **dadurch gekennzeichnet, dass** die Aufströmkammer (3a) ein Wirbelbett und die Abströmkammer (2a) ein Festbett aufweisen.

20. Filterkartusche nach einem der Ansprüche 17 bis 19, **dadurch gekennzeichnet, dass** in der Zwischen Bodenwand (7, 21 a) und Zwischenboden (7a) gebildeten Kammer (60) ein Filtermedium angeordnet ist.

21. Filterkartusche nach Anspruch 20, **dadurch gekennzeichnet, dass** das Filtermedium in der Kammer (60) ein Aktivkohlevlies ist.

22. Filterkartusche nach einem der Ansprüche 2 bis 21, **dadurch gekennzeichnet, dass** der Auslaufstutzen (21) und/oder der Stabilisierungsring (50) mindestens einen sich um den Umfang erstreckenden Dichtwulst (24) aufweist/en.

23. Sitzelement (30) für eine Filterkartusche (1), insbesondere Saugfilterkartusche, nach Anspruch 1, **gekennzeichnet durch** einen in die Auslauföffnung (20) der Filterkartusche (1) eingreifenden Rohrstutzen (33), der mindestens ein Betätigungselement aufweist, das beim Aufsetzen der Filterkartusche (1) den Schnapprand (22) von einer ersten unteren Schnappposition in die zweite obere Schnappposition bewegt, in der der Schnapprand abdichtend und klemmend am Rohrstutzen (33) anliegt.

24. Sitzelement nach Anspruch 23, **dadurch gekennzeichnet, dass** das Betätigungselement eine am Rohrstutzen (33) angeformte Ringschulter (35) ist.

25. Sitzelement nach Anspruch 23 oder 24, **dadurch gekennzeichnet, dass** der Rohrstutzen (33) auf einer Grundplatte (31) angeordnet ist.

26. Sitzelement nach Anspruch 25, **dadurch gekennzeichnet, dass** auf der Grundplatte (31) mindestens ein Distanzelement (32b) angeordnet ist.

27. Sitzelement nach Anspruch 25 oder 26, **dadurch gekennzeichnet, dass** auf der Grundplatte (31) ein Positionierelement (32) angeordnet ist.

## Claims

1. Filter cartridge (1), in particular suction filter cartridge, with filter means, with at least one up-current chamber (3a) and at least one down-current chamber (2a), which are connected together in the upper area, and with an inlet area (10) upstream of at least one inlet opening (14), and with an outlet opening (20), the two being disposed in the bottom area, **characterised in that** an inward pointing, encircling snap rim (22) is disposed in the outlet opening (20) and can be flipped over from a first lower snap position into an upper second snap position and vice versa.

2. Filter cartridge (1) according to Claim 1, **characterised in that** the outlet opening (20) comprises an outlet connection piece (21), to the lower end of which the snap rim (22) is articulated.

3. Filter cartridge (1) according to Claim 1 or 2, **characterised in that** the snap rim (22) is articulated via a film hinge (23).

4. Filter cartridge (1) according to any one of Claims 1 to 3, **characterised in that** the snap rim (22) is a flat edge strip extending radially inwards.

5. Filter cartridge (1) according to any one of Claims 2 to 4, **characterised in that** the outlet connection piece (21) is surrounded by a stabilising ring (50) on its outside.

6. Filter cartridge (1) according to Claim 5, **characterised in that** the stabilising ring (50) comprises an angled collar (52) which projects into the outlet opening (20) and against which the snap rim (22) lies in its first lower snap position.

7. Filter cartridge (1) according to any one of Claims 2 to 6, **characterised in that** the inlet area (10) surrounds the outlet connection piece (21) in the shape of a ring.

8. Filter cartridge (1) according to any one of Claims 5 to 7, **characterised in that** the stabilising ring (50) is disposed at the outlet connection piece (21) in a rotatable manner.

9. Filter cartridge (1) according to any one of Claims 2 to 8, **characterised in that** the outlet connection piece (21) comprises at least one first opening (25).

10. Filter cartridge (1) according to any one of Claims 5 to 9, **characterised in that** the stabilising ring (50) comprises a cylindrical section (51) which lies against the outlet connection piece (21) and at which a closure element (54) or in which at least one second opening (53) is located, which opening can be brought to coincidence with the first opening (25).

11. Filter cartridge (1) according to either of Claims 9 and 10, **characterised in that** the second opening (53) of the stabilising ring (50) is ≥ the first opening (25) of the outlet connection piece (21).

12. Filter cartridge (1) according to any one of Claims 5 to 11, **characterised in that** the stabilising ring (50) lies against the outlet connection piece (21) in a sealing manner.

13. Filter cartridge according to any one of Claims 1 to 8, **characterised in that** at least one bypass opening (26) is disposed in the bottom wall (7, 21a) of the down-current chamber (2a).

14. Filter cartridge according to Claim 13, **characterised in that** a rising pipe (27), which surrounds the bypass opening (26), is disposed in the down-current chamber (2a).

15. Filter cartridge according to Claim 13 or 14, **characterised in that** the stabilising ring (50) comprises a closure element (54) which lies against the underside of the bottom wall (7, 21a).

16. Filter cartridge according to Claim 15, **characterised in that** the closure element (54) is a part-annular collar.

17. Filter cartridge according to any one of Claims 1 to 16, **characterised in that** the down-current chamber (2a) comprises a liquid-permeable intermediate bottom (7a).

18. Filter cartridge (1) according to any one of Claims 1 to 17, **characterised in that** both the up-current chamber (3a) and the down-current chamber (2a) comprise at least one filter means.

19. Filter cartridge (1) according to Claim 18, **characterised in that** the up-current chamber (3a) comprises a fluidised bed and the down-current chamber (2a) comprises a fixed bed.

20. Filter cartridge (1) according to any one of Claims 17 to 19, **characterised in that** a filter medium is disposed in the chamber (60) formed between the bottom wall (7, 21a) and the intermediate bottom (7a).

21. Filter cartridge according to Claim 20, **characterised in that** the filter medium in the chamber (60) is an activated carbon fleece.

22. Filter cartridge according to any one of Claims 2 to 21, **characterised in that** the outlet connection piece (21) and/or the stabilising ring (50) comprise(s) at least one sealing bead (24) which extends around the circumference.

23. Seat element (30) for a filter cartridge (1), in particular suction filter cartridge, according to Claim 1, **characterised by** a pipe connection piece (33) which engages in the outlet opening (20) of the filter cartridge (1) and comprises at least one actuating element which, when the filter cartridge (1) is placed in position, moves the snap rim (22) from a first lower snap position into the second upper snap position, in which the snap rim lies against the pipe connection piece in a sealing and clamping manner.

24. Seat element according to Claim 23, **characterised in that** the actuating element is an annular shoulder (35) which is formed on the pipe connection piece (33).

25. Seat element according to Claim 23 or 24, **characterised in that** the pipe connection piece (33) is disposed on a base plate (31).

26. Seat element according to Claim 25, **characterised in that** at least one spacer element (32b) is disposed on the base plate (31).

27. Seat element according to Claim 25 or 26, **characterised in that** a positioning element (32) is disposed on the base plate (31).

## Revendications

1. Cartouche filtrante (1), en particulier cartouche filtrante absorbante, avec des moyens de filtration, avec au moins une chambre d'admission (3a) et au moins une chambre d'évacuation (2a), qui communiquent l'une avec l'autre dans la partie supérieure, et avec une zone d'entrée (10), disposée en amont d'au moins un orifice d'entrée (14), et avec une ouverture de sortie (20), qui sont disposées toutes deux dans la zone du fond, **caractérisée en ce que** dans l'ouverture de sortie (20) est prévu un bord encliquetable (22) périphérique, orienté vers l'intérieur, lequel peut être rabattu depuis une première position d'encliquetage inférieure dans une deuxième position d'encliquetage supérieure et inversement.

2. Cartouche filtrante (1) selon la revendication 1, **caractérisée en ce que** l'ouverture de sortie (20) comporte une tubulure d'évacuation (21), sur l'extrémité inférieure de laquelle est articulé le bord encliquetable (22).

3. Cartouche filtrante (1) selon la revendication 1 ou 2, **caractérisée en ce que** le bord encliquetable (22) est attaché par l'intermédiaire d'un film formant charnière (23).

4. Cartouche filtrante (1) selon l'une quelconque des revendications 1 à 3, **caractérisée en ce que** le bord encliquetable (22) est une bande de bordure plate qui s'étend radialement vers l'intérieur.

5. Cartouche filtrante (1) selon l'une quelconque des revendications 2 à 4, **caractérisée en ce que** la tubulure d'évacuation (21) est entourée sur sa face extérieure par une bague stabilisatrice (50).

6. Cartouche filtrante (1) selon la revendication 5, **caractérisée en ce que** la bague stabilisatrice (50) comporte une collerette (52) coudée, qui s'engage dans l'ouverture de sortie (20) et sur laquelle le bord encliquetable (22) prend appui dans sa première position d'encliquetage.

7. Cartouche filtrante (1) selon l'une quelconque des revendications 2 à 6, **caractérisée en ce que** la zone d'entrée (10) entoure en forme d'anneau la tubulure d'évacuation (21).

8. Cartouche filtrante (1) selon l'une quelconque des revendications 5 à 7, **caractérisée en ce que** la bague stabilisatrice (50) est disposée de manière à pouvoir tourner sur la tubulure d'évacuation (21).

9. Cartouche filtrante (1) selon l'une quelconque des revendications 2 à 8, **caractérisée en ce que** la tubulure d'évacuation (21) comporte au moins une première ouverture (25).

10. Cartouche filtrante (1) selon l'une quelconque des revendications 5 à 9, **caractérisée en ce que** la bague stabilisatrice (50) comporte une partie cylindrique (51), qui est en appui sur la tubulure d'évacuation (21) et sur laquelle se situe un élément de fermeture (54) ou dans laquelle se situe au moins une deuxième ouverture (53) pouvant être amenée en correspondance avec la première ouverture (25).

11. Cartouche filtrante (1) selon la revendication 9 ou 10, **caractérisée en ce que** la deuxième ouverture (53) de la bague stabilisatrice (50) est plus grande ou égale à la première ouverture (25) de la tubulure d'évacuation (21).

12. Cartouche filtrante (1) selon l'une quelconque des revendications 5 à 11, **caractérisée en ce que** la bague stabilisatrice (50) est en appui étanche sur la tubulure d'évacuation (21).

13. Cartouche filtrante (1) selon l'une quelconque des revendications 1 à 8, **caractérisée en ce qu'**au moins une ouverture de by-pass (26) est réalisée dans la paroi du fond (7, 21a) de la chambre d'évacuation (2a).

14. Cartouche filtrante (1) selon la revendication 13, **caractérisée en ce qu'**une conduite montante (27), entourant l'ouverture de by-pass (26), est disposée dans la chambre d'évacuation (2a).

15. Cartouche filtrante (1) selon la revendication 13 ou 14, **caractérisée en ce que** la bague stabilisatrice (50) comporte un élément de fermeture (54) en appui sur la face inférieure de la paroi du fond (7, 21a).

16. Cartouche filtrante (1) selon la revendication 15, **caractérisée en ce que** l'élément de fermeture (54) est une collerette en forme d'anneau partiel.

17. Cartouche filtrante (1) selon l'une quelconque des revendications 1 à 16, **caractérisée en ce que** la chambre d'évacuation (2a) comporte un fond intermédiaire (7a) perméable aux liquides.

18. Cartouche filtrante (1) selon l'une quelconque des revendications 1 à 17, **caractérisée en ce que** la chambre d'admission (3a), de même que la chambre d'évacuation (2a) comportent au moins un moyen de filtration.

19. Cartouche filtrante (1) selon la revendication 18, **caractérisée en ce que** la chambre d'admission (3a) comporte un lit fluidisé et la chambre d'évacuation (2a) comporte un lit fixe.

20. Cartouche filtrante (1) selon l'une quelconque des revendications 17 à 19, **caractérisée en ce qu'**un agent filtrant est disposé dans la chambre (60) formée entre la paroi du fond (7, 21a) et le fond intermédiaire (7a).

21. Cartouche filtrante (1) selon la revendication 20, **caractérisée en ce que** l'agent filtrant dans la chambre (60) est un non-tissé à charbon actif.

22. Cartouche filtrante (1) selon l'une quelconque des revendications 2 à 21, **caractérisée en ce que** la tubulure d'évacuation (21) et/ou la bague stabilisatrice (50) comportent au moins un bourrelet d'étanchéité (24) s'étendant sur le pourtour.

23. Élément de fixation (30) pour une cartouche filtrante (1), en particulier cartouche filtrante absorbante, selon la revendication 1, **caractérisé par** une tubulure (33), qui s'engage dans l'ouverture de sortie (20) de la cartouche filtrante (1) et qui comporte au moins un élément d'actionnement qui, au moment de la pose de la cartouche filtrante (1), déplace le bord encliquetable (22) depuis une première position d'encliquetage inférieure dans la deuxième position d'encliquetage supérieure, dans laquelle le bord encliquetable est en appui étanche et serré contre la tubulure (33).

24. Élément de fixation selon la revendication 23, **caractérisé en ce que** l'élément d'actionnement est un épaulement annulaire (35) formé sur la tubulure (33).

25. Élément de fixation selon la revendication 23 ou 24, **caractérisé en ce que** la tubulure (33) est disposée sur un socle (31).

26. Élément de fixation selon la revendication 25, **caractérisé en ce qu'**au moins un élément d'écartement (32b) est disposé sur le socle (31).

27. Élément de fixation selon la revendication 25 ou 26, **caractérisé en ce qu'**un élément de positionnement (32) est disposé sur le socle (31).
